# EUROPEAN PATENT APPLICATION

(11) **EP 0 542 326 A1**
(43) Date of publication of application: **19.05.1993**
(21) Application number: 92203101.8
(22) Date of filing: 08.10.1992
(51) Int. Cl.: C08G 73/02, H01B 1/12

(54) **Multi- stage process for producing polyanilines with high electrical conductivity**

(30) Priority: 09.10.1991 IT MI912681
(71) Applicant: ISTITUTO GUIDO DONEGANI S.p.A., I-28100 Novara (IT)
(72) Inventor: Boara, Giulio, I-22060 Crema (Cremona) (IT)
(74) Representative: Fusina, Gerolamo

(57) **Abstract**

A multi-stage process for producing polyanilines of high electrical conductivity, by the oxidative polymerization of aniline in the presence of an aqueous solution of a strong acid and an alkaline oxidizing agent, characterised in that:
a) said strong acid is phosphoric acid;
b) the global acid:aniline molar ratio is between 5 and 8 and preferably between 5 and 6;
c) in a first stage the aniline acid salt is formed using less than the aforesaid proportion of acid, and in a second stage the remaining quantity of acid is added followed by the oxidizing agent, polymerization then being continued until the temperature reaches a maximum.

## Description

This invention relates to a multi-stage process for producing polyanilines with high electrical conductivity. As is well known, said polyanilines are widely used in the production of vehicle storage batteries, photovoltaic cells and electric cells, and in very advanced electronic, optical, nuclear and aerospace applications, as indicated (partly) in international patent WO 90/10297 and USA patent 3,803,096.

Said polyanilines have already been prepared by oxidative polymerization of the monomer in the presence of an aqueous solution of a strong acid and an alkaline oxidizing agent such as ammonium persulphate or potassium dichromate.

The strong acids used up to the present time have included hydrochloric, sulphuric, fluoroboric, formic, tosic and arylpolysulphonic acids. In this respect, reference should be made to international patent WO 91/11480. A characteristic common to these acids is that if their quantity exceeds a determined level the electrical conductivity of the polymer decreases. Even under optimum conditions, said conductivity never reaches a level which would be of high industrial interest. The following process improvements have therefore been suggested:
- said publication WO 91/11480, for example, suggests operating in the presence of a small quantity of dianiline (N-phenyl-p-phenylinediamine) as molecular weight regulator, and possibly adding a platinum-based catalyst to facilitate the dissolving of the dianiline by acetic or formic acid;
- USA patent 4,629,540 suggests effecting oxidation with common agents (generally alkaline persulphates or dichromates) in the presence of fluoride ions (or using electrochemical oxidation).

The applicant has now surprisingly noted that if said strong acid is phosphoric acid added in a suitable quantity, exceptionally high electrical conductivity (exceeding 50 S/cm, ie exceeding the level reached by any other strong acid) is achieved, even without fluoride ions being present and without using dianiline.

In its widest aspect, the invention therefore relates to a multi-stage process for producing polyanilines of high electrical conductivity, by the oxidative polymerization of aniline in the presence of an aqueous solution of a strong acid and an alkaline oxidizing agent, characterised in that:
a) said strong acid is phosphoric acid;
b) the global acid:aniline molar ratio is between 5 and 8 and preferably between 5 and 6;
c) in a first stage the aniline acid salt is formed using less than the aforesaid proportion of acid, and in a second stage the remaining quantity of acid is added followed by the oxidizing agent, polymerization then being continued until the temperature reaches a maximum.

The applicant has also noted that very satisfactory results can also be obtained by (partially or totally) replacing the phosphoric acid with oxalic acid.

The invention is obviously not limited to aniline polymers but also extends to polymers of the more common aniline derivatives, such as methylaniline, N-methylaniline, alkyl- and N-alkyl-aniline etc. Some of these derivatives are indicated in USA patent 4,629,540. The process of the invention can be implemented in various ways. Advantageously:
- The oxidizing agent is chosen from alkaline persulphates, permanganates, periodates, pertechnetates and dichromates (of K, NH₄ etc.), hydrogen peroxide and ferric chloride (FeCl₃).
- The quantity of oxidizing agent is approximately equivalent to one half the quantity of aniline, the oxidizing agent being added in the form of an aqueous solution.
- The acid is added as an aqueous solution, the first solution portion being more dilute than the second portion.
- The polymerization temperature is allowed to rise spontaneously to a maximum (usually between ambient temperature and 70°C, according to the used acid), after which the reaction system is cooled suddenly, for example by an ice bath, to prevent undesirable decomposition
- The quantity of aniline is equal to or greater than 10 wt% (preferably 15-30 wt%) of the total of aniline + water.
- Said reaction mixture also contains a small quantity of dianiline, the aniline/dianiline molar ratio exceeding 6 (and preferably between 6 and 100), the dissolving of the dianiline in water being possibly facilitated by the presence of an organic solvent (carboxylic acid, alcohol, ketone etc.).

By means of the process according to the invention, polyanilines are obtained having excellent technical properties, and in particular:
- an electrical conductivity equal to or greater than 50 S/cm;
- an inherent viscosity of between 0.2 and 0.6, said viscosity being defined in USA patent 4,615,829;
- a very low polydispersity ratio (Mw/Mn), ie a high level of uniformity of molecular weight distribution.

It is well known that polyanilines are difficult to use because of their tendency to decompose and their practically complete insolubility in most solvents.

European patent EPA-432929 teaches that greater stability can be obtained by polymerizing aniline in the presence of a modified aniline of formula: 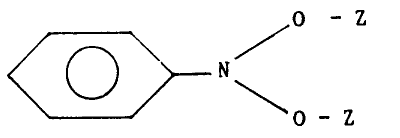
where Z is a polyoxyalkylene chain, ie in the presence of an aniline having polyoxyalkylene chains bonded directly to the nitrogen atom. The applicant has noted that even greater stability can be achieved if the modified aniline used is a compound chosen from anilides of formula (I), (II) or (III): 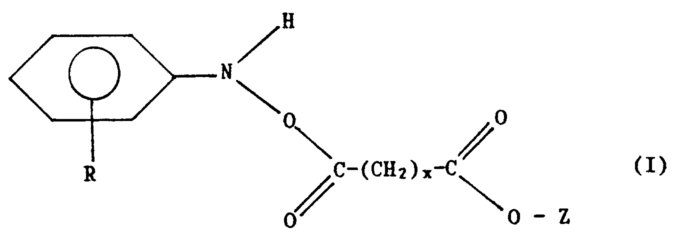 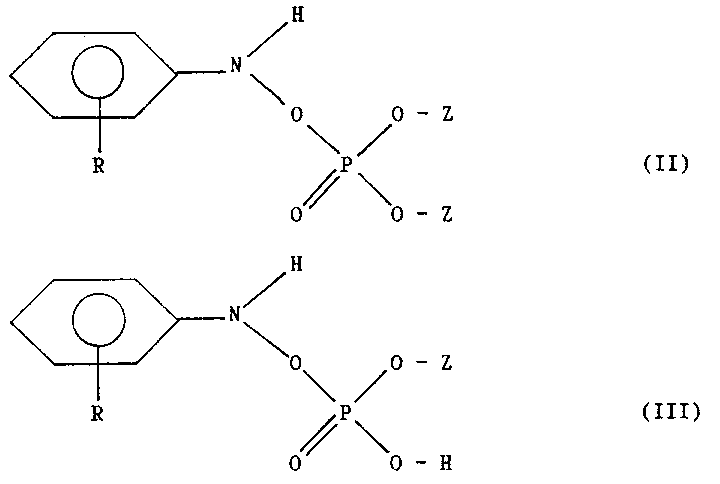
where x is chosen from zero and 1, R is an alkyl with 1-4 carbon atoms and Z is a polyoxyalkylene chain of formula (IV): 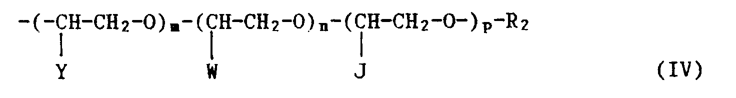
where R₂, Y, W and J are chosen from H and CH₃, the sum m+n+p is at least 2 (preferably between 2 and 100) and m, n and p are zero or whole numbers between 1 and 100.

In other words, a greater advantage has been noted by interposing an oxalic, malonic or phosphoric matrix group between the nitrogen atom of the aniline and the polyoxyalkylene chain. When the anilide is inserted into the polymer chain polyanilines are obtained containing for example recurring units of type A and/or type B: 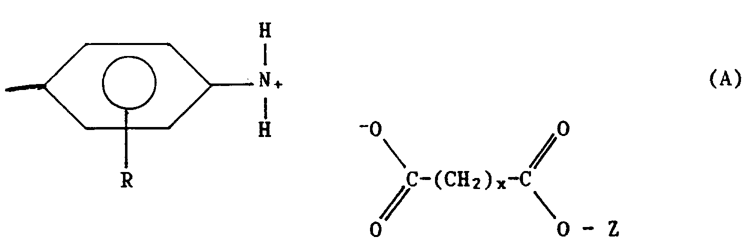 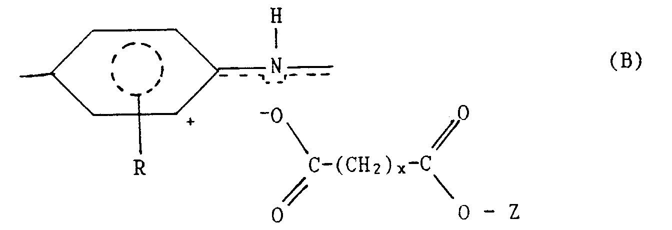
For interpretation of formulas (A) and (B) reference should be made to USA patent 4,904,553. The following examples are given merely for illustration and in no way limit the scope of the invention. The quantities and ratios are expressed by weight except where otherwise indicated.

### EXAMPLE 1

1 mole of aniline and 1 mole of phosphoric acid were initially fed into a glass flask fitted with a thermometer and mechanical agitator. The H₃PO₄ was fed as a 10 wt% aqueous solution. The resultant mixture, with a pH of about 0.5, was agitated for about one hour to form the aniline phosphoric salt (C₆H₅NH₂.H₃PO₄). 4 moles of H₃PO₄ were then added (in the form of a 60 wt% aqueous solution) and a sudden fall in pH was noted, together with a gradual rise in temperature. 0.5 moles of ammonium persulphate (as oxidizing agent) were then added in the form of a 45 wt% (NH₄)₂S₂O₈ aqueous solution under vigorous agitation. The polymerization reaction was allowed to proceed, continuously recording the temperature. At a certain point (about 60°C; the temperatures recorded for the other acids of the following examples were however different) the temperature ceased to increase and the reaction was terminated by suddenly cooling the reactor by quenching in an ice bath, so preventing triggering of undesirable decomposition. During the reaction a gradual precipitation of polyaniline was noted together with an increase in pH. One hour after quenching, the polyaniline was recovered by filtration, washed three times with a 1 M phosphoric acid solution, dried in air for about 24 hours and finally washed with ether in a Soxhlet apparatus and characterised.

The electrical conductivity (58 S/cm) was determined by the four-in-a-line method using a Keithley 224 programmable current source and a Keithley 127 voltmeter (current = 1 mA). The measurement was confirmed by the van der Paw method. The degree of protonation of the polyaniline was about 50%. Said degree of protonation was determined by measuring the weight loss after attack by NH₄OH.

The product was then analyzed by gel permeation chromotography (GPC) using a Philips PU 4100 chromatograph provided with a differential detector (refractive index/viscometer) and four TSK-GEL columns in series with the following molecular weight order: 10⁴; 6 x 10⁴; 4 x 10⁵; 4 x 10⁶.

The results of the chromatographic analysis are shown in Figure . On this figure the horizontal axis represents exit time from the chromatograph (decreasing function of the polymer molecular weight) and the vertical axis represents polymer absorbance (wavelength = 590 nanometers).

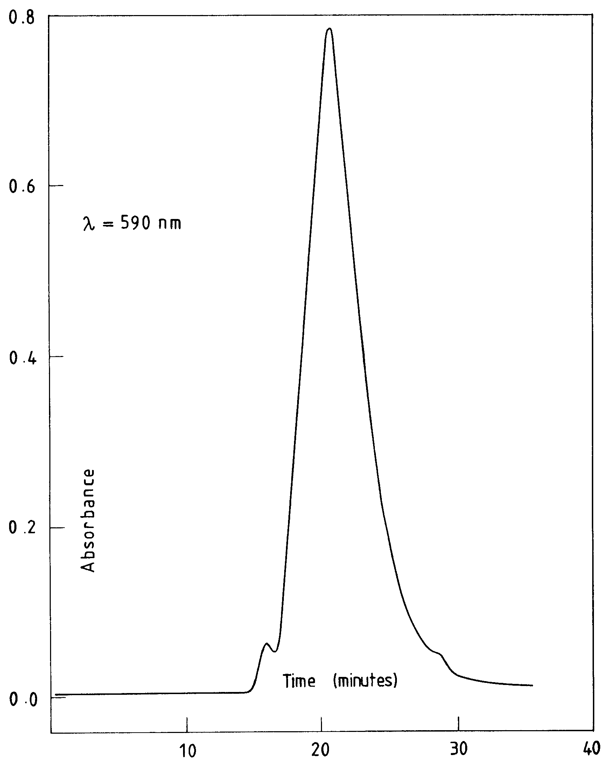

As can be seen, the graph on the figure has a very narrow peak, corresponding to a polydispersity ratio (Mw:Mn) which is very low compared with polymers synthesized up to the present time. In other words it was noted for the first time that there is a relationship between uniformity of molecular weight distribution in polymers and their electrical conductivity.

### EXAMPLE 2 (comparative)

Example 1 was repeated but replacing the phosphoric with toluenesulphonic acid. Data and results are shown in Table 1.

### EXAMPLE 3

Example 1 was repeated but replacing the phosphoric with oxalic acid. Data and results are shown in Table 1.

**TABLE 1**

| EXAMPLE | ACID | CONDUCTIVITY (S/cm) |
|---|---|---|
| 1 | phosphoric | 58 |
| 2(*) | p-toluenesulphonic | 15 |
| 3 | oxalic | 25 |

| | | |
|---|---|---|
| (*) Comparative | | |

## Claims

1. A multi-stage process for producing polyanilines of high electrical conductivity, by the oxidative polymerization of aniline in the presence of an aqueous solution of a strong acid and an alkaline oxidizing agent, characterised in that:
a) said strong acid is phosphoric acid;
b) the global acid:aniline molar ratio is between 5 and 8 and preferably between 5 and 6;
c) in a first stage the aniline acid salt is formed using less than the aforesaid proportion of acid, and in a second stage the remaining quantity of acid is added followed by the oxidizing agent, polymerization then being continued until the temperature reaches a maximum.

2. The process of claim 1, wherein the oxidizing agent is chosen from hydrogen peroxide, ferric chloride and alkaline persulphates, dichromates, permanganates, periodates and pertechnetates (preferably ammonium persulphate and/or potassium dichromate).

3. The process of claim 1, wherein the oxidizing agent is added in the form of an aqueous solution.

4. The process of claim 1, wherein the oxidizing agent is added in a quantity substantially equivalent to one half of the aniline quantity.

5. The process of claim 1, wherein the strong acid is added in the form of an aqueous solution, the first portion of aqueous solution, added simultaneously with the aniline, being more dilute than the second portion, which is added in the second stage.

6. The process of claim 5, wherein the aniline quantity is between 10 and 30 wt% (preferably 15-30%) of the sum of aniline + water.

7. The process of claim 5, effected in the presence of an anilide chosen from the anilides of formula (I), (II) and (III): 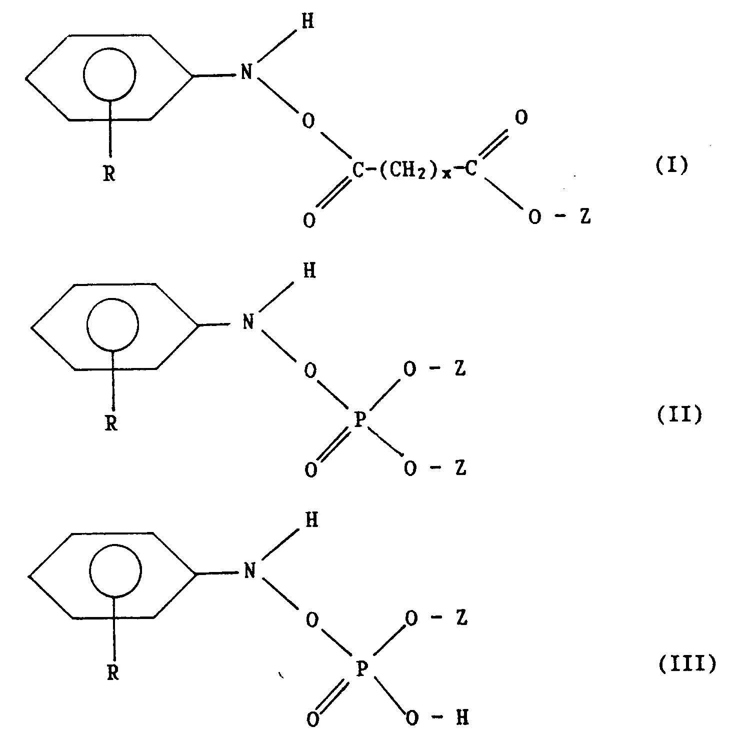 where x is chosen from zero and 1, R is an alkyl group with 1-4 carbon atoms and Z is a polyoxyalkylene chain of formula (IV): 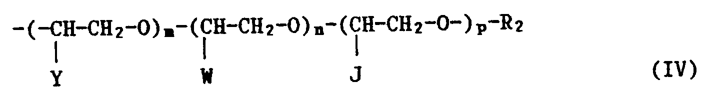 where R₂, Y, M and J are chosen from H and CH₃, the sum m+n+p is at least 2 (preferably between 2 and 100) and m, n and p are zero or whole numbers between 1 and 100.

8. Polyanilines obtained by the process in accordance with one of the preceding claims, having a high degree of uniformity of molecular weight distribution and an electrical conductivity equal to or greater than 50 and preferably greater than 58 S/cm.

9. The polyanilines of claim 8 having an intrinsic viscosity of between 0.2 and 0.6.

10. Stable aqueous dispersions of polyanilines, obtained by the process of claim 7 and containing recurring units of type A and/or type B: 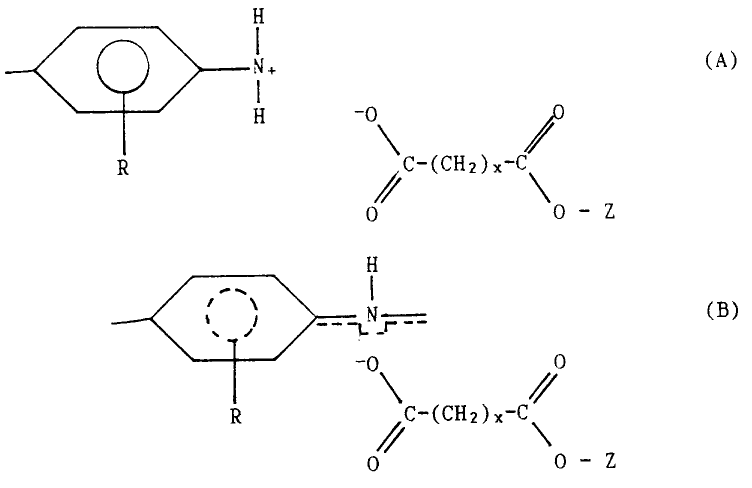 where R, Z and x have the meaning indicated in claim 7.
